# EUROPÄISCHE PATENTSCHRIFT

(11) **EP 4 129 045 B1**
(45) Veröffentlichungstag und Bekanntmachung des Hinweises auf die Patenterteilung: **29.01.2025**
(21) Anmeldenummer: 22168341.0
(22) Anmeldetag: 14.04.2022
(51) Int. Cl.: A01F 15/07, A01F 15/08

(54) **RUNDBALLENPRESSE UND VERFAHREN ZUM ÖFFNEN EINER AUSWURFKLAPPE EINER RUNDBALLENPRESSE**
ROUND BALER AND METHOD FOR OPENING AN EJECTION FLAP OF A ROUND BALER
PRESSE À BALLE RONDE ET PROCÉDÉ D'OUVERTURE D'UNE TRAPPE D'ÉJECTION D'UNE PRESSE À BALLE RONDE

(30) Priorität: 05.08.2021 DE 102021120404
(43) Veröffentlichungstag der Anmeldung: 08.02.2023
(73) Patentinhaber: Usines CLAAS France S.A.S, 57140 St. Rémy / Woippy (FR)
(72) Erfinder: Fuchs, Volker, 54439 Saarburg (DE); Wucher, Renaud, 57070 Metz (FR); Fritsch, Jeremie, 57420 Marieulles (FR); Dachelet, Thibaut, 57140 Woippy (FR); Mörsch, Daniel, 66706 Perl (DE); Batancourt, Grégory, 57130 Vionville (FR); Risse, Nicolas, 57645 Retonfey (FR); Obellianne, Steve, 57530 Courcelles-Chaussy (FR); Rennert, Justus, 33100 Paderborn (DE)
(74) Vertreter: CLAAS 365FarmNet GmbH

(56) Entgegenhaltungen:
- EP-A1- 2 183 957
- EP-B1- 1 444 882
- EP-B1- 3 162 188
- US-A1- 2005 247 215

## Beschreibung

Die vorliegende Erfindung betrifft eine Rundballenpresse gemäß dem Oberbegriff des unabhängigen Patentanspruchs 1, eine landwirtschaftliche Arbeitsmaschine gemäß dem Oberbegriff des unabhängigen Patentanspruchs 14, ein Verfahren zum Öffnen einer Auswurfklappe einer Rundballenpresse gemäß dem Oberbegriff des unabhängigen Patentanspruchs 15 sowie ein Computerprogramm, insbesondere Computerprogrammprodukt, gemäß dem Oberbegriff des unabhängigen Patentanspruch 16.

Herkömmliche Rundballenpressen weisen sogenannte Mittel zum Aufnehmen und Fördern auf, die das Erntegut vom Boden einer landwirtschaftlichen Fläche aufnehmen und in eine Presskammer der Rundballenpresse fördern, in der das Erntegut zu einem Rundballen geformt wird. Das Pressengehäuse der Rundballenpresse weist ein feststehendes Pressengehäuseteil und eine an dem feststehenden Pressengehäuseteil schwenkbar gelagerte Auswurfklappe auf. Das Pressengehäuse umgibt die Presskammer, wobei diese durch eine Vielzahl von über einen Antrieb angetriebenen Presswalzen definiert wird, die sowohl an dem feststehenden Pressengehäuseteil als auch an der Auswurfklappe verteilt angeordnet sind, so dass sie die Presskammer umfangsseitig begrenzen. Mittels der angetriebenen Presswalzen wird das über die Mittel zum Aufnehmen und Fördern in die Presskammer geförderte Erntegut zu einem Rundballen geformt. Bevor der in der Presskammer geformte bzw. gepresste Rundballen über ein Öffnen der Auswurfklappe aus der Rundballenpresse ausgeworfen wird, wird dieser von einer Einrichtung innerhalb der Presskammer mit einer Hülle, insbesondere einer Folie, einem Netz und/oder dergleichen, ummantelt bzw. eingewickelt.

Während des Pressvorgangs eines Rundballens drehen sich alle die Presskammer begrenzende Presswalzen gleichsinnig, so dass das Erntegut gleichmäßig über eine Aufwärtsbewegung nach und nach in Form des Rundballens gepresst wird. Nach Abschluss eines Pressvorgangs öffnet sich die Auswurfklappe und gibt eine Auswurföffnung frei, durch die der gepresste Rundballen, insbesondere über die angetriebenen unteren Presswalzen am feststehenden Pressengehäuseteil, ausgeworfen wird. Die Geschwindigkeit mit der sich die Auswurfklappe öffnet entspricht dabei im Wesentlichen der Geschwindigkeit mit der der gepresste Rundballen ausgeworfen wird, so dass die Gehäuseklappe während ihres Öffnungsvorgangs nahezu über einen Großteil ihrer Schwenkbewegung von ihrer Schließstellung in ihre Öffnungsstellung Kontakt mit dem Rundballen hat. Insbesondere kontaktiert die am unteren Rand der Auswurfklappe angeordnete Presswalze, die auch während des Auswerfens des Rundballens weiter angetrieben wird, den ummantelten Rundballen während des Auswerfens. Die während des Pressvorgangs gleichsinnige Drehbewegung von Rundballen und Presswalzen, insbesondere von der Presswalze am unteren Rand der Auswurfklappe, wandelt sich während des Öffnungsvorgangs allmählich in eine gegensinnige Drehbewegung um.

Dies ist problematisch, da durch die gegensinnige Drehbewegung des Rundballens und der am unteren Rand der Auswurfklappe angeordneten und während des Auswerfens des Rundballens weiterhin angetriebenen Presswalze die Hülle des ummantelten bzw. eingewickelten Rundballens eine zusätzliche Belastung erfährt. Da die Hülle des Rundballens bereits durch den Druck des gepressten Rundballens einer Beanspruchung unterliegt, ist die durch die gegensinnige Drehbewegung induzierte zusätzliche Belastung kritisch. Insbesondere besteht ein erhebliches Risiko, dass die unter Spannung stehende Hülle des Rundballens durch den Kontakt mit der angetriebenen Presswalze am unteren Rand der Auswurfklappe partiell beschädigt wird und der Rundballen keinen ausreichenden Zusammenhalt mehr erfährt.

Die EP 3 162 187 A1 schlägt zur Lösung dieser Problemstellung eine Rundballenpresse vor, bei der die eine Auswurföffnung für den ummantelten Rundballen begrenzende Presswalze von der Auswurfklappe über eine Schaltkupplung vom Antrieb abkuppelbar ist. Hierdurch wird der Antrieb der die Auswurföffnung begrenzenden Presswalze der Auswurfklappe über die Schaltkupplung abgeschaltet und die Presswalze frei drehbar. Der aus der Auswurföffnung ausrollende Rundballen liegt mit der ummantelten Oberfläche an der frei drehenden Presswalze der Auswurfklappe an, wenn diese geöffnet wird, so dass lediglich Druckkräfte auf den Rundballen ausgeübt werden und der Rundballen keinerlei Mehrbelastung erfährt.

Eine derartige mechanische Entkopplung der an der Auswurfklappe angeordneten Presswalze ist jedoch nur mit einem erheblichen konstruktiven Mehraufwand zu realisieren. Zudem steigt die Komplexität der Ballenpresse durch eine Erhöhung der Anzahl an zusätzlichen Bauteilen bzw. Komponenten, die an der Rundballenpresse, insbesondere am Gehäuse der Rundballenpresse, angeordnet werden müssen, in erheblichem Maße. Eine Zunahme der Bauteilanzahl geht immer mit einer erhöhten Fehleranfälligkeit einher, da weitere Bauteile angebracht werden, die verschleißen können. Ferner steigert eine derartige mechanische Lösung die Kosten der Rundballenpresse und erfordert zusätzliche Wartungsmaßnahmen, die der Produktivität der Rundballenpresse und ihrer Wirtschaftlichkeit entgegenstehen.

Aus der US 2005/247215 A1 ist weiterhin eine Ballenpresse mit einem Sensor bekannt, der es erlaubt verschiedene Positionen der Auswurfklappe der Ballenpresse während ihrer Bewegung aus der Schließstellung in die Offenstellung, in der ein geformter Ballen ausgeworfen werden kann, zu erfassen und die Geschwindigkeit eines Aktuators der Auswurfklappe abhängig hiervon während der Bewegung zu steuern.

Ausgehend von dem vorstehend genannten Stand der Technik ist es demnach die Aufgabe der vorliegenden Erfindung, eine Rundballenpresse anzugeben, die ein Auswerfen des gepressten und mit einer Hülle ummantelten Rundballens ermöglicht, ohne die Hülle zu beschädigen und ohne eine Entkopplung der Presswalzen vom Antrieb.

Diese Aufgabe wird erfindungsgemäß durch die Merkmale des unabhängigen Patentanspruchs 1 gelöst, wobei vorteilhafte Weiterbildungen der erfindungsgemäßen Rundballenpresse Gegenstand der entsprechenden abhängigen Patentansprüche 2 bis 13 sind.

Demnach betrifft die vorliegende Erfindung eine Rundballenpresse mit einem eine Presskammer aufweisenden Pressengehäuse, das zumindest ein feststehendes Gehäuseteil und ein an dem feststehenden Gehäuseteil zwischen einer Schließstellung und einer Öffnungsstellung schwenkbar gelagerte Auswurfklappe aufweist, mit Mitteln zum Aufnehmen und Fördern von Erntegut in die Presskammer, mit mittels eines Antriebs angetriebenen Presswalzen, die auf dem feststehenden Gehäuseteil und der Auswurfklappe verteilt und die Presskammer umfangsseitig begrenzend angeordnet sind, und mit einer Einrichtung zum Ummanteln von in der Presskammer aus dem zugeführten Erntegut gepressten Rundballen mit einer Hülle. Die Rundballenpresse ist durch mindestens einen doppeltwirkenden Druckmittelzylinder, insbesondere einen Hydraulikzylinder, der mit der Auswurfklappe verbunden und dazu eingerichtet ist, die Auswurfklappe reversibel zwischen der Schließstellung und der Öffnungsstellung zu verschwenken, und ein Proportionalventil, vorzugsweise ein 4/3-Wegeproportionalventil, das mit dem mindestens einen Druckmittelzylinder zum Zuführen, Abführen und oder Regulieren eines Druckmittels, insbesondere einer Hydraulikflüssigkeit, und einer Steuerungseinrichtung verbunden ist, gekennzeichnet, wobei die Steuerungseinrichtung dazu eingerichtet ist, das Proportionalventil derart anzusteuern, dass ein Öffnungsvorgang der Auswurfklappe in Abhängigkeit einer unmittelbar nach Abschluss eines Pressvorgangs bestimmten Position der Auswurfklappe entweder mit einer konstanten Geschwindigkeit oder geschwindigkeitsvariabel erfolgt.

Die Verwendung eines mittels einer Steuerungseinrichtung ansteuerbaren Proportionalventils, das den doppeltwirkenden Druckmittelzylinder zum Verschwenken der Auswurfklappe mit einem Druckmittel versorgt, erlaubt es einen Öffnungsvorgang der Auswurfklappe zum Auswerfen des gepressten und ummantelten Rundballens derart durchzuführen, dass dieser geschwindigkeitsvariabel (d.h. während des Öffnungsvorgangs der Auswurfklappe, also dem Verschwenken der Auswurfklappe aus ihrer Schließstellung in ihre Öffnungsstellung, wird diese mit verschiedenen Geschwindigkeiten bewegt bzw. verschwenkt) erfolgt. Hierdurch läuft die Auswurfklappe, insbesondere die am unteren Rand der Auswurfklappe angeordnete und angetriebene Presswalze, während des Auswerfens des Rundballens vor dem Ballen vorher, ohne den Rundballen zu kontaktieren. Mittels der Ansteuerung des Proportionalventils über die Steuerungseinrichtung wird die Volumenstrom bzw. Durchflussmenge des Druckmittels derart reguliert bzw. gesteuert, dass in Abhängigkeit von verschiedenen Positionen, die die Auswurfklappe während ihres Öffnungsvorgangs einnimmt, die Auswurfklappe mit unterschiedlichen Geschwindigkeiten bewegt bzw. verschwenkt wird.

So ist es angedacht, dass die Auswurfklappe zunächst aus ihrer Schließstellung sehr schnell in Richtung ihrer Öffnungsstellung bewegt bzw. verschwenkt wird, kurz vor Erreichen ihrer Öffnungsstellung die Geschwindigkeit der Auswurfklappe schrittweise bis auf eine geringere Geschwindigkeit reduziert wird und die Auswurfklappe dann mit dieser bis in ihre Öffnungsstellung bewegt bzw. verschwenkt wird. Hierdurch wird nicht nur verhindert, dass die Hülle des Rundballens während des Öffnungsvorgangs der Auswurfklappe von der am unteren Rand der Auswurfklappe angeordneten Presswalze beschädigt wird, sondern es wird auch vermieden, dass die Mechanik zum Verschwenken der Auswurfklappe und/oder die Lagerung der Auswurfklappe am feststehenden Gehäuseteil durch eine zu hohe Öffnungsgeschwindigkeit kurz vor Erreichen der Öffnungsstellung bzw. im Zeitpunkt des Erreichens der Öffnungsstellung beschädigt wird, da eine Trägheit des Druckmittelkreislaufs, der den mindestens einen Druckmittelzylinder mit Druckmittel zum Bewegen bzw. Verschwenken der Auswurfklappe versorgt, ein rechtzeitiges und kontrolliertes Abbremsen der Auswurfklappe nicht mehr gewährleisten könnte und die Auswurfklappe beispielsweise mit einer zu hohen Geschwindigkeit gegen einen die Öffnungsstellung definierenden Anschlag fährt.

Sollte die Auswurfklappe nach Abschluss des Pressvorgangs bereits eine gewisse (unbeabsichtigte) Öffnungsstellung eingenommen haben, da sie sich beispielsweise aufgrund eines während des Pressvorgangs auf die Auswurfklappe ausgeübten Drucks bereits leicht geöffnet hat oder die Auswurfklappe vor dem eigentlichen Pressvorgang zu Wartungszwecken geöffnet, aber nicht wieder vollständig geschlossen wurde, kann der Öffnungsvorgang mit einer konstanten, insbesondere langsameren, Geschwindigkeit durchgeführt werden.

Auch hierdurch kann ein schonendes Auswerfen des gepressten und ummantelten Rundballens gewährleistet werden, gleichzeitiger jedoch sichergestellt werden, dass eine "Fehlstellung" der Auswurfklappe nicht zu Beschädigungen der Mechanik und/oder Lagerung durch eine zu hohe Öffnungsgeschwindigkeit der Auswurfklappe kurz vor Erreichen oder bei Erreichen der Öffnungsstellung führt.

Die Verknüpfung des Proportionalventils mit der (intelligenten) Steuerungseinrichtung unter Berücksichtigung der Position der Auswurfklappe nach Abschluss des Pressvorgangs erlaubt eine vollautomatische Steuerung des Öffnungsvorgangs der Auswurfklappe, ohne dass ein Benutzer der Rundballenpresse bzw. einer landwirtschaftlichen Arbeitsmaschine mit der die Rundballenpresse gekoppelt ist die Stellung der Auswurfklappe überprüfen und den Öffnungsvorgang selbsttätig steuern müsste. Die Rundballenpresse, insbesondere die Steuerungsvorrichtung, steuert selbstständig auf Grundlage der Position der Auswurfklappe das Proportionalventil an, so dass der Volumenstrom bzw. die Durchflussmenge des an den mindestens einen Druckmittelzylinder geförderten Druckmittels entsprechend dem durchzuführenden Öffnungsvorgang der Auswurfklappe reguliert wird.

Es kann somit auf aufwendige mechanische Entkopplungseinrichtungen verzichtet werden, um die am unteren Rand der Auswurfklappe angeordnete Presswalze abzuschalten. Vielmehr kann diese während des Öffnungsvorgangs der Auswurfklappe weiterhin angetrieben werden, ohne das die Gefahr einer Beschädigung der Hülle des Rundballens besteht.

Gemäß einer vorteilhaften Weiterbildung der Erfindung ist vorgesehen, dass bei dem geschwindigkeitsvariablen Öffnungsvorgang die Geschwindigkeit der Auswurfklappe zwischen einem ersten vorabfestgelegten Geschwindigkeitsbetrag und einem zweiten vorabfestgelegten Geschwindigkeitsbetrag, der verschieden von dem ersten vorabfestgelegten Geschwindigkeitswert ist, variiert und bei dem Öffnungsvorgang mit konstanter Geschwindigkeit die Geschwindigkeit der Auswurfklappe den zweiten vorabfestgelegten Geschwindigkeitsbetrag annimmt.

Durch eine Variation der Geschwindigkeiten mit der die Auswurfklappe geöffnet wird kann einerseits besonders vorteilhaft ein Kontakt von Presswalze und Hülle des Rundballens während des Auswerfens des Rundballens verhindert werden und andererseits sichergestellt werden, dass die Mechanik und/oder Lagerung der Auswurfklappe nicht beschädigt wird. Die Auswurfklappe wird zunächst schnell und rechtzeitig vor Erreichen ihrer Öffnungsstellung einer langsameren Geschwindigkeit bewegt bzw. verschwenkt. Im Falle einer "Fehlstellung" der Auswurfklappe wird hingegen lediglich mit der langsameren Geschwindigkeit bewegt bzw. verschwenkt, da nicht sichergestellt werden kann, dass der geschwindigkeitsvariable Öffnungsvorgang nicht zu einer Beschädigung der Mechanik und/oder Lagerung führen könnte, da die Auswurfklappe nicht aus ihrer Schließstellung bewegt wird, sondern aus einer bereits geöffneten Stellung, was in einem verkürzten Öffnungsweg resultiert.

Gemäß einer weiteren vorteilhaften Weiterbildung der Erfindung ist vorgesehen, dass der erste vorabfestgelegte Geschwindigkeitsbetrag größer als der zweite vorabfestgelegte Geschwindigkeitsbetrag ist.

Insbesondere, entspricht der erste vorabfestgelegte Geschwindigkeitsbetrag einer systembedingten Maximalgeschwindigkeit.

Hierdurch wird sichergestellt, dass die Auswurfklappe während des Auswerfens des Rundballens solange vor diesem bewegt wird, ohne diesen zu kontaktieren, bis eine Position bzw. Stellung der Auswurfklappe einen Kontakt mit dem Rundballen aufgrund des Schwenkwinkels der Auswurfklappe ausgeschlossen ist. Ferner kann durch ein Bewegen bzw. Verschwenken zu Beginn des Öffnungsvorgangs, also nach Abschluss des Pressvorgangs, mit der systembedingten Maximalgeschwindigkeit eine hohe Produktivität der Rundballenpresse sichergestellt werden, da die Auswerfzeiten geringgehalten werden können.

Gemäß einer weiteren vorteilhaften Weiterbildung der Erfindung ist vorgesehen, dass der erste vorabfestgelegte Geschwindigkeitsbetrag und/oder der zweite vorabfestgelegte Geschwindigkeitsbetrag in Abhängigkeit von Betriebsparametern der Rundballenpresse und/oder von Parametern des Rundballens vorabfestgelegt ist, vorzugsweise in Abhängigkeit einer Auswurfgeschwindigkeit eines gepressten Rundballens.

Diese Ausgestaltung ermöglicht es, dass die Auswurfklappe beispielsweise in Abhängigkeit des Ballendurchmessers, der Presswalzengeschwindigkeit, des Pressdrucks, des verwendeten Ernteguts und/oder sonstiger Parameter geschwindigkeitsvariabel oder konstant bewegt bzw. verschwenkt wird, um die Rundballenpresse mit maximaler Produktivität zu betreiben und Rundballen mit maximaler Qualität zu erzeugen.

Gemäß einer weiteren vorteilhaften Weiterbildung der Erfindung ist vorgesehen, dass die Steuerungseinrichtung dazu eingerichtet ist, die unmittelbar nach Abschluss des Pressvorgangs bestimmte Position der Auswurfklappe mit einem ersten vorabfestgelegten Positionswert zu vergleichen und basierend auf dem Vergleich das Proportionalventil derart anzusteuern, entweder den Öffnungsvorgang mit konstanter Geschwindigkeit oder den geschwindigkeitsvariablen Öffnungsvorgang einzuleiten.

Durch einen mittels der Steuerungseinrichtung durchgeführten Vergleichs der Position der Auswurfklappe mit einem ersten vorabfestgelegten Positionswert kann bestimmt werden, ob die Auswurfklappe nach Abschluss des Pressvorgangs in ihrer vorgesehen Schließstellung vorliegt und somit geschwindigkeitsvariabel geöffnet werden kann oder ob eine "Fehlstellung" vorliegt, in der ein Öffnungsvorgang zum Schutz der Mechanik und/oder Lagerung nur mit konstanter Geschwindigkeit erfolgen kann.

Gemäß einer weiteren vorteilhaften Weiterbildung der Erfindung ist vorgesehen, dass, falls die unmittelbar nach Abschluss des Pressvorgangs bestimmte Position der Auswurfklappe den ersten vorabfestgelegten Positionswert unterschreitet, die Steuerungseinrichtung dazu eingerichtet ist, das Proportionalventil derart anzusteuern, dass die Geschwindigkeit der Auswurfklappe den ersten vorabfestgelegten Geschwindigkeitsbetrag annimmt und zwar für die Dauer eines ersten vorabfestgelegten Zeitintervalls oder bis die Auswurfklappe einen definierten Positionswert einnimmt.

Hierdurch wird die sich in der ordnungsgemäßen Position, also der Schließstellung, befindende Auswurfklappe unmittelbar nach Abschluss des Pressvorgangs, insbesondere nach Erhalt eines durch einen Benutzer der Rundballenpresse bzw. der landwirtschaftlichen Arbeitsmaschine generierten oder eines von der Steuerungseinrichtung nach Abschluss des Press- und Ummantelungsvorgangs automatisch erzeugten Signals zum Öffnen der Auswurfklappe, zunächst mit der systembedingten Maximalgeschwindigkeit bewegt bzw. verschwenkt, so dass der Rundballen bzw. die Hülle des Rundballens keinen Kontakt mit der unteren Presswalze der Auswurfklappe bekommt, gleichzeitig die Produktivität der Rundballenpresse jedoch hoch bleibt.

Gemäß einer weiteren vorteilhaften Weiterbildung der Erfindung ist vorgesehen, dass die Steuerungseinrichtung dazu eingerichtet ist, eine nach Ablauf, vorzugsweise unmittelbar nach Ablauf, des ersten vorabfestgelegten Zeitintervalls oder bei Erreichen des definierten Positionswerts bestimmte Position der Auswurfklappe mit einem zweiten vorabfestgelegten Positionswert iterativ zu vergleichen und basierend auf dem Vergleich das Proportionalventil anzusteuern, wobei, vorzugsweise, die Steuerungseinrichtung dazu eingerichtet ist, eine neue Iterationsschleife jeweils nach Ablauf eines zweiten vorabfestgelegten Zeitintervalls auszulösen.

Hierdurch wird überprüft, ob die Auswurfklappe bereits eine kritische Position während des Öffnungsvorgangs eingenommen, die nahe an der Öffnungsstellung der Auswurfklappe liegt, so dass ein Öffnen mit der reduzierten Geschwindigkeit notwendig wird, um die Mechanik und/oder Lagerung vor Beschädigungen durch eine zu hohe Öffnungsgeschwindigkeit der Auswurfklappe zu schützen.

Gemäß einer weiteren vorteilhaften Weiterbildung der Erfindung ist vorgesehen, dass, falls die nach Ablauf des ersten vorabfestgelegten Zeitintervalls oder bei Erreichen des definierten Positionswerts in einer Iterationsschleife bestimmte Position der Auswurfklappe den zweiten vorabfestgelegten Positionswert unterschreitet und die Geschwindigkeit der Auswurfklappe zu diesem Zeitpunkt den zweiten Geschwindigkeitsbetrag übersteigt, die Steuerungseinrichtung dazu eingerichtet ist, das Proportionalventil derart anzusteuern, dass sich die Geschwindigkeit der Auswurfklappe je Iterationsschleife um einen vorabfestgelegten Geschwindigkeitsbetrag oder einen Prozentsatz, vorzugsweise um 10 %, reduziert und zwar bis die nach einer Iterationsschleife bestimmte Position der Auswurfklappe den zweiten vorabfestgelegten Positionswert einnimmt oder überschreitet und/oder die Geschwindigkeit der Auswurfklappe den zweiten vorabfestgelegten Geschwindigkeitsbetrag annimmt oder unterschreitet.

Weiterhin ist erfindungsgemäß vorgesehen, dass, falls die nach Ablauf des ersten vorabfestgelegten Zeitintervalls oder bei Erreichen des definierten Positionswerts bestimmte Position der Auswurfklappe den zweiten vorabfestgelegten Positionswert einnimmt oder überschreitet und/oder die Geschwindigkeit der Auswurfklappe den zweiten vorabfestgelegten Geschwindigkeitsbetrag annimmt oder unterschreitet, die Steuerungseinrichtung dazu eingerichtet ist, das Proportionalventil derart anzusteuern, dass die Geschwindigkeit der Auswurfklappe den zweiten vorabfestgelegten Geschwindigkeitsbetrag annimmt und zwar bis die Auswurfklappe die Öffnungsstellung eingenommen hat.

Die Öffnungsgeschwindigkeit der Auswurfklappe wird bei Erreichen der kritischen Position, also einer vorabfestgelegten Position nahe der Öffnungsstellung der Auswurfklappe, schrittweise auf die langsamere zweite Geschwindigkeit bzw. den zweiten Geschwindigkeitsbetrag gedrosselt, wodurch einerseits die Komponenten des Druckmittelkreislaufs und andererseits die Mechanik und/oder Lagerung geschont werden. Es erfolgt keine schlagartige Geschwindigkeitsreduktion, was in einer erhöhten Belastung der Komponenten des Druckmittelkreislaufs resultieren würde. Vielmehr wird die Öffnungsgeschwindigkeit stufenartig bis auf die zweite vorabfestgelegte Geschwindigkeit bzw. den zweiten vorabfestgelegten Geschwindigkeitsbetrag, also die geringere bzw. langsamere Geschwindigkeit, gedrosselt bzw. reduziert, bei der sichergestellt ist, dass die Auswurfklappe kontrolliert bis in ihrer Öffnungsstellung gefahren werden kann. Die zweite Geschwindigkeit ist derart gewählt, dass die Mechanik und/oder Lagerung bei Erreichen der Öffnungsstellung der Auswurfklappe keinerlei überhöhte Belastung und/oder Beschädigung erfährt.

Gemäß einer weiteren vorteilhaften Weiterbildung der Erfindung ist vorgesehen, dass, falls die unmittelbar nach Abschluss des Pressvorgangs bestimmte Position der Auswurfklappe dem ersten vorabfestgelegten Positionswert entspricht oder diesen überschreitet, die Steuerungseinrichtung dazu eingerichtet ist, das Proportionalventil derart anzusteuern, dass die Geschwindigkeit der Auswurfklappe den zweiten vorabfestgelegten Geschwindigkeitsbetrag annimmt und zwar bis die Auswurfklappe die Öffnungsstellung eingenommen hat.

Dieser mittels der Steuerungseinrichtung durchgeführte Vergleich stellt sicher, dass im Falle einer "Fehlstellung" der richtige Öffnungsvorgang, also der Öffnungsvorgang mit konstanter Geschwindigkeit, initiiert wird.

Gemäß einer weiteren vorteilhaften Weiterbildung der Erfindung ist vorgesehen, dass der erste vorabfestgelegte Positionswert betragsmäßig kleiner als der zweite vorabfestgelegte Positionswert ist.

Insbesondere, liegt der erste vorabfestgelegte Positionswert nahe an dem Positionswert der Schließstellung der Auswurfklappe, vorzugsweise bis zu 10 % von dem Positionswert der Schließstellung in Richtung der Öffnungsstellung abweicht, und der zweite vorabfestgelegte Positionswert nahe an dem Positionswert der Öffnungsstellung der Auswurfklappe, besonders bevorzugt mindestens 10 % unterhalb des Positionswert der Öffnungsstellung.

Die Definition dieser Grenzwerte stellt sicher, dass die Auswurfklappe, sofern der Öffnungsstellung nur gering und eine Beschädigung der Mechanik und/oder Lagerung ausgeschlossen werden kann, geschwindigkeitsvariabel geöffnet wird, um die Produktivität der Rundballenpresse aufrechtzuerhalten. Gleichzeitig wird sichergestellt, dass die Drosselung der Geschwindigkeit rechtzeitig vor Erreichen der Öffnungsstellung initiiert wird, damit in keinem Fall die Mechanik und/oder Lagerung unter Mitleidenschaft gezogen wird.

Die Festlegung der Grenzwerte kann in Abhängigkeit von Parametern der Rundballenpresse, Parametern des gepressten und/oder des zu pressenden Rundballens und/oder des verwendeten Ernteguts erfolgen.

Gemäß einer weiteren vorteilhaften Weiterbildung der Erfindung ist vorgesehen, dass das erste vorabfestgelegte Zeitintervall mindestens eine Sekunde, vorzugsweise 1,5 Sekunden, das zweite vorabfestgelegte Zeitintervall 5 Millisekunden beträgt und/oder der definierte Positionswert kleiner als der zweite vorabfestgelegte Positionswert ist oder diesem entspricht.

Das Wahl der Zeitdauer des ersten Zeitintervalls oder die Festlegung des definierten Positionswerts stellt sicher, dass der Öffnungsvorgang mit erhöhter Geschwindigkeit ausreichend lange erfolgt, so dass zu keinem Zeitpunkt während des gesamten Öffnungsvorgangs ein Kontakt von an der Auswurfklappe angeordneter und angetriebener Presswalzen und der Hülle des Rundballens entstehen kann, der zu einer Beschädigung der Hülle und somit zu einer Beeinträchtigung des Zusammenhalts des Rundballens führen könnte.

Die Wahl der Zeitdauer des zweiten Zeitintervalls sorgt dafür, dass die Geschwindigkeitsreduktion zwar zügig jedoch kontrolliert erfolgt, um einerseits den Öffnungsvorgang in kurzer Zeit abzuschließen und andererseits die Komponenten des Druckmittelkreislaufs, die Mechanik und/oder Lagerung vor unnötig hohen Belastungen, insbesondere in impulsartiger Form, zu schützen.

Die Wahl der Zeitdauer des jeweiligen Zeitintervalls oder die Festlegung des definierten Positionswerts kann in Abhängigkeit von Parametern der Rundballenpresse, Parametern des gepressten und/oder des zu pressenden Rundballens und/oder des verwendeten Ernteguts erfolgen.

Gemäß einer weiteren vorteilhaften Weiterbildung der Erfindung ist die Rundballenpresse durch einen Positionssensor gekennzeichnet, insbesondere einen Drehwinkelsensor, der mit der Steuerungseinrichtung verbunden und der dazu eingerichtet ist, vorzugsweise kontinuierlich, die Position, insbesondere einen Stellwinkel, der Auswurfklappe mittelbar oder unmittelbar zu bestimmen.

Hierdurch kann besonders einfach die für die Durchführung des Öffnungsvorgangs und für die durch die Steuerungseinrichtung durchzuführenden Vergleiche notwendige Positionsbestimmung der Auswurfklappe erfolgen. Die Positionsbestimmung erfolgt vorzugsweise mittels eines Drehwinkelsensors, der den Stellwinkel der Auswurfklappe, also den Winkel der Auswurfklappe in Bezug auf die Schließstellung und/oder Öffnungsstellung, detektiert und diesen an die Steuerungseinrichtung mittels Datenübertragung weitergibt, die diese Position/Positionen für die durchzuführenden Vergleiche mit den vorabfestgelegten Positionswerten benötigt. Der Positionssensor kann beispielsweise Spannungssignale generieren auf Grundlage dessen die Steuerungseinrichtung auf die Position der Auswurfklappe zurückschließen bzw. diese berechnen kann.

Es ist ebenfalls vorstellbar, dass die Position bzw. Stellung der Auswurfklappe über einen Positionssensor im Bereich des mindestens einen Druckmittelzylinders bestimmt wird, der die Stellung des Zylinderkolbens bestimmt, wodurch mittels der Steuerungseinrichtung auf die Position bzw. Stellung der Auswurfklappe rückgeschlossen werden kann.

Die zu manchen Zeitpunkten des Öffnungsvorgangs zu Vergleichs- und Entscheidungszwecken der Steuerungseinrichtung notwendige Bestimmung der Geschwindigkeit der Auswurfklappe kann über den mittels des Proportionalventils zu dem mindestens einen Druckmittelzylinder geförderten Volumenstrom oder aber über einen und/oder mehrere Sensoren erfolgen, die im Bereich der Auswurfklappe angeordnet sind.

Die erfindungsgemäße Aufgabe wird ferner durch eine landwirtschaftliche Arbeitsmaschine mit einer an die landwirtschaftliche Arbeitsmaschine angehängten Rundballenpresse gemäß dem unabhängigen Patentanspruch 14 gelöst.

Die erfindungsgemäße Aufgabe wird weiterhin durch ein Verfahren zum Öffnen einer Auswurfklappe einer Rundballenpresse gemäß dem unabhängigen Patentanspruch 15 gelöst.

Die erfindungsgemäße Aufgabe wird zudem durch ein Computerprogramm, insbesondere Computerprogrammprodukt, gemäß dem unabhängigen Patentanspruch 16 gelöst.

Die vorliegende Erfindung wird nachstehend anhand der in den Figuren abgebildeten Ausführungsformen näher beschrieben.

Es zeigen:
- Fig. 1:: eine schematische und exemplarische Ansicht einer erfindungsgemäßen Rundballenpresse;
- Fig. 2:: ein schematisches und exemplarisches Blockschaltbild eines Druckmittelkreislaufs zur Ansteuerung einer Auswurfklappe der erfindungsgemäßen Rundballenpresse, insbesondere des/der Druckmittelzylinder zum Bewegen bzw. Verschwenken der Auswurfklappe der erfindungsgemäßen Rundballenpresse, gemäß FIG. 1; und
- Fig. 3:: ein schematisches und exemplarisches Ablaufdiagramm des erfindungsgemäßen Verfahrens zum Öffnen der Auswurfklappe der erfindungsgemäßen Rundballenpresse gemäß FIG. 1.

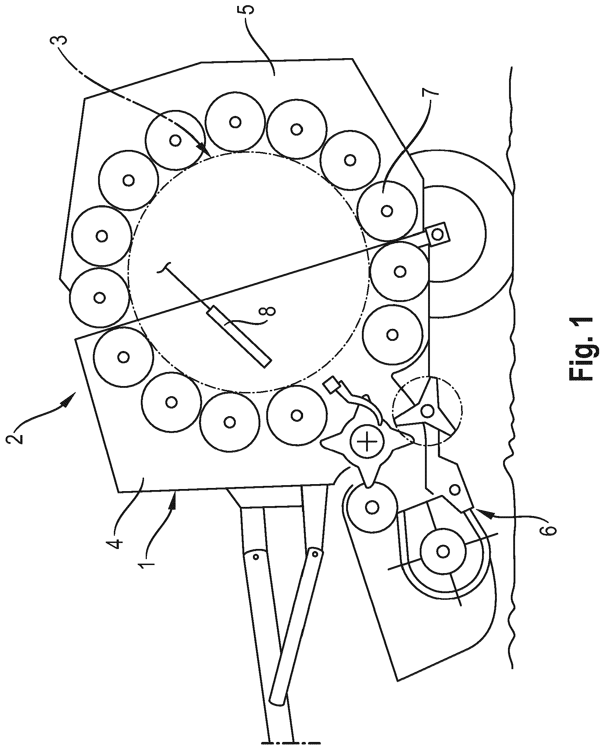

FIG. 1 zeigt eine schematische und exemplarische Darstellung einer Ausführungsform der erfindungsgemäßen Rundballenpresse 1. Die Rundballenpresse 1 weist ein Pressengehäuse 2 auf, das aus einem feststehenden Gehäuseteil 4 und eine an dem feststehenden Gehäuseteil 4 schwenkbar gelagerte Auswurfklappe 5 besteht bzw. diese aufweist. Die Auswurfklappe 5 ist derart schwenkbar an dem feststehenden Gehäuseteil 2 des Pressengehäuses 2 gelagert, dass diese zwischen einer Schließstellung P_{S} und einer Öffnungsstellung P_{Ö} verlagerbar ist. Das Pressengehäuse 2, insbesondere der feststehende Gehäuseteil 4, ist in aller Regel auf einem Fahrgestell angeordnet und mit diesem verbunden, über das die Rundballenpresse 1 wiederum mit einer in den FIGs. nicht dargestellten landwirtschaftlichen Arbeitsmaschine, insbesondere einem Traktor, gekoppelt sein kann.

Das Pressengehäuse 2, insbesondere die beiden Gehäuseteile 4, 5, begrenzen eine Presskammer 3, in die mithilfe von Mitteln 6 zum Aufnehmen und Fördern von Erntegut das vom Boden aufgenommene Erntegut gefördert wird. Die Mittel 6 umfassen zumindest eine sogenannte Pick-Up, mit deren Hilfe das Erntegut vom Boden einer landwirtschaftlichen Fläche aufgenommen wird, und einen Rotor, mit dessen Hilfe das aufgenommene Erntegut in die Presskammer 3 geführt wird.

Sowohl das feststehende Gehäuseteil 4 als auch die Auswurfklappe 5 weisen eine Vielzahl von Presswalzen 7 auf, die beabstandet voneinander an beiden Gehäuseteilen 4, 5 verteilt und die Presskammer 3 umfangsseitig begrenzend angeordnet sind. Jede der Presswalzen 7 wird von einem in den FIGs. nicht dargestellten Antrieb angetrieben, wodurch das in die Presskammer 3 gefördertes Erntegut zu einem Rundballen geformt bzw. gepresst wird. Die Rundballenpresse 1 weist ferner eine in den FIGs. ebenfalls nicht dargestellte Einrichtung zum Ummanteln von in der Presskammer 3 gepressten Rundballen mit einer Hülle auf. Wie eingangs bereits angemerkt kann die Hülle eine Folie, ein Netz und/oder dergleichen sein.

Nachdem der gepresste Rundballen mittels der Einrichtung ummantelt wurde, muss der Rundballen aus der Presskammer 3 ausgeworfen werden. Ein derartiger Zeitpunkt wird im Rahmen der vorliegenden Erfindung als nach Abschluss des Pressvorgangs definiert. Um das Auswerfen des Rundballens zu ermöglichen, wird die Auswurfklappe 5 nach Abschluss des Pressvorgangs von ihrer Schließstellung P_{S} in ihre Öffnungsstellung P_{Ö} mithilfe mindestens eines doppeltwirkenden Druckmittelzylinders 8, insbesondere eines doppeltwirkenden Hydraulikzylinders, bewegt bzw. verschwenkt. Der mindestens eine Druckmittelzylinder 8 ist hierfür einerseits an dem feststehenden Gehäuseteil 4 oder dem Fahrgestell und andererseits an der Auswurfklappe 5 befestigt. Vorzugsweise ist der mindestens eine Druckmittelzylinder 8 in einem seitlichen Bereich angeordnet, so dass er kein Hindernis für den auszuwerfenden Rundballen darstellt. Auch wenn in FIG. 1 nur ein solcher Druckmittelzylinder 8 dargestellt ist, kann sowohl rechts- als auch linksseitig jeweils ein solcher Druckmittelzylinder 8 angeordnet sein, so dass die Auswurfklappe 5 gleichmäßig bewegt bzw. verschwenkt werden kann.

Bei einem Öffnungsvorgang der Auswurfklappe 5 besteht die eingangs geschilderte Problematik, dass die am unteren Rand der Auswurfklappe 5 angeordnete Presswalze 7 weiterhin angetrieben wird und im Kontakt mit dem sich in der Auswurfbewegung befindenden ummantelten Rundballen gelangen kann. Hierdurch besteht aufgrund des sich wandelnden relativen Drehsinns beider Elemente zueinander während des Öffnungsvorgangs der Auswurfklappe 5 ein erhöhtes Beschädigungsrisiko für die Hülle des Rundballens.

Um dieser Problematik zu begegnen und hierbei auf komplizierte zusätzliche mechanische Entkopplungseinrichtung an der Rundballenpresse 1 verzichten zu können, ist erfindungsgemäß ein über eine in den FIGs. nicht dargestellte Steuerungseinrichtung angesteuertes Proportionalventil 9 vorgesehen, das in den Druckmittelkreislauf, der vorzugsweise ein Hydraulikkreislauf ist, integriert ist und den dem mindestens einen Druckmittelzylinder 8 zugeführten Volumenstrom des Druckmittels derart reguliert, dass in Abhängigkeit einer nach Abschluss des Pressvorgangs bestimmten Position der Auswurfklappe 5 der Öffnungsvorgang der Auswurfklappe 5 entweder geschwindigkeitsvariabel oder konstant erfolgt.

Im Rahmen der vorliegenden Erfindung kann die Steuerungseinrichtung entweder Teil der Rundballenpresse 1 oder aber Teil einer landwirtschaftlichen Arbeitsmaschine sein, an die die Rundballenpresse 1 angekoppelt ist. Auch ist es vorstellbar, dass die Steuerungseirichtung eine externe Einrichtung ist, die weder Teil der Rundballenpresse 1 noch Teil der landwirtschaftlichen Arbeitsmaschine ist, sondern mit den Komponenten der Rundballenpresse 1 und/oder der landwirtschaftlichen Arbeitsmaschine drahtlos kommuniziert.

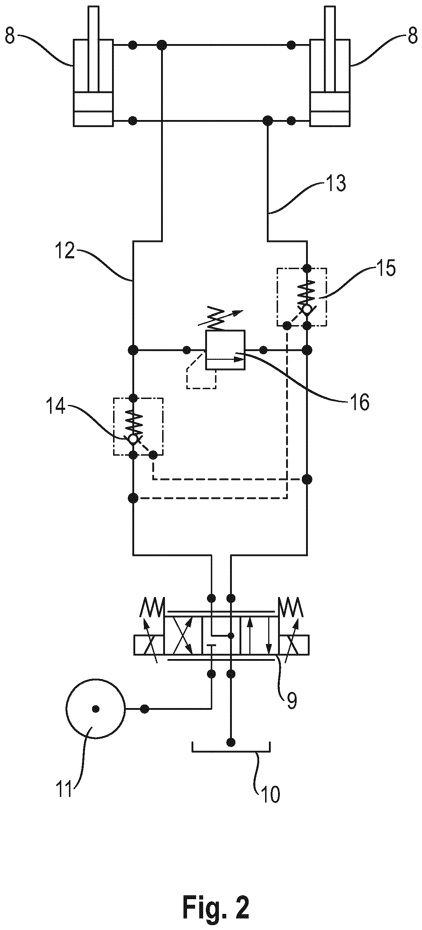

FIG. 2 zeigt ein Blockschaltbild eines Druckmittelkreislaufs zur Versorgung des mindestens einen Druckmittelzylinders 8, der das erfindungsgemäße Proportionalventil 9 umfasst. Auch wenn in FIG. 2 zwei Druckmittelzylinder 8 abgebildet sind, die jeweils an das Proportionalventil 9 angeschlossen sind, versteht es sich, dass auch lediglich ein Druckmittelzylinder 8 zum Bewegen der Auswurfklappe 5 an das Proportionalventil 9 angeschlossen sein kann. Das Proportionalventil 9 ist vorzugsweise als 4/3-Wegeproportionalventil ausgebildet, das vier Anschlüsse und drei Schaltstellungen aufweist, so dass je nach gewählter Schaltstellung über eine Verbindung eines an der landwirtschaftlichen Arbeitsmaschine vorgesehenen Tanks 10 und/oder einer Druckmittelpumpe 11 über die Druckmittelzuführleitungen 12, 13 Druckmittel einem Ringraum des jeweiligen doppeltwirkenden Druckmittelzylinders 8 zugeführt oder aus diesem abgeführt werden kann, um die mit den Druckmittelzylindern 8 wirkverbundene Auswurfklappe 5 reversibel zwischen der Schließstellung P_{S} und der Öffnungsstellung P_{Ö} während eines Öffnungsvorgangs oder eines Schließvorgangs zu bewegen bzw. zu verschwenken oder diese in einer Schließ- oder Öffnungsstellung P_{S}, Pö zu halten. Andere Ausgestaltungen des Proportionalventils sind ebenfalls vorstellbar.

Der Druckmittelkreislauf kann weiterhin ein einer jeweiligen Druckmittelzuführleitung 12, 13 zugeordnetes Rückschlagventil 14, 15, die jeweils über eine sogenannte Steuerleitung entsperrbar sind, sowie ein Druckbegrenzungsventil 16 umfassen. Derartige Ventile 14, 15, 16 sind in Druckmittelkreisläufen zur Betätigung von Druckmittelzylindern im Kontext von Ballenpressen hinlänglich bekannt, so dass auf eine detaillierte Beschreibung im Rahmen dieser Erfindung verzichtet wird.

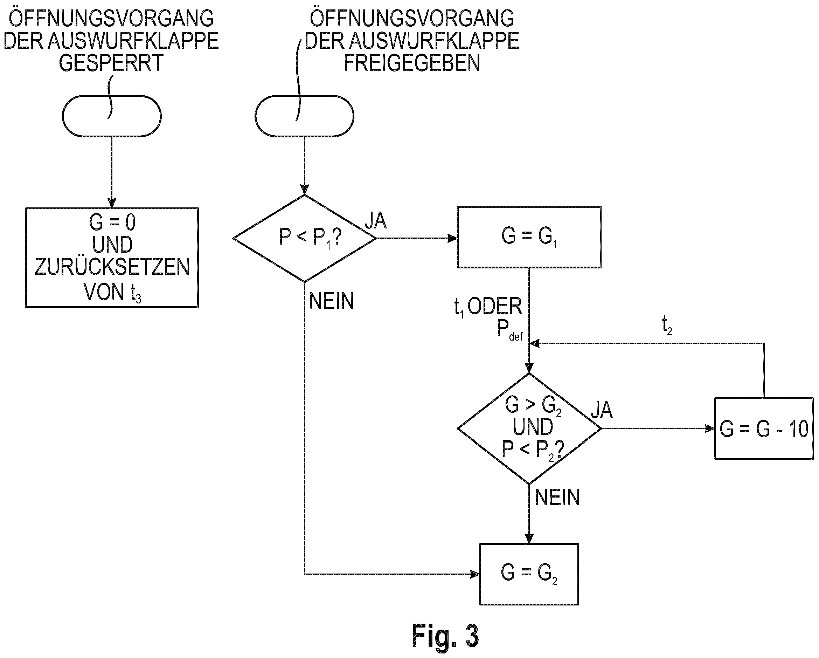

Bezugnehmen auf FIG. 3 wird nachfolgend die erfindungsgemäße Ansteuerung des Proportionalventils 9 mittels der Steuerungseinrichtung zum Öffnen der Auswurfklappe 5 der Rundballenpresse 1 beschrieben.

Nach Abschluss des Pressvorgangs des Rundballens wird ein Signal erzeugt, mittels dem ein Öffnungsvorgang der Auswurfklappe 5 freigegeben wird. Dieses Signal kann entweder durch einen Benutzer der Rundballenpresse 1 bzw. der landwirtschaftlichen Arbeitsmaschine, indem er nach Abschluss des Pressvorgangs einen Schalter, Knopf, Hebel, eine Anzeigeeinrichtung und/oder dergleichen betätigt, oder aber automatisiert von der Ballenpresse 1 und/oder der landwirtschaftlichen Arbeitsmaschine, insbesondere der Steuerungseinrichtung, erzeugt werden.

Nach Initiierung des Öffnungsvorgangs wird mittels eines in den FIGs. nicht dargestellten Positionssensors, der vorzugsweise als Drehwinkelsensor ausgebildet ist, die aktuelle bzw. gegenwärtige Position P (der aktuelle bzw. gegenwärtige Stellwinkel P) der Auswurfklappe 5 bestimmt. Im ordnungsgemäßen Fall sollte diese bestimmte Position P mit der Schließstellung P_{S} der Auswurfklappe 5 übereinstimmen. Es kann jedoch auch der Fall auftreten, dass die Auswurfklappe 5 nach Abschluss des Pressvorgangs bereits in geöffneter Position bzw. Stellung vorliegt. Dieser Zustand kann beispielsweise durch einen während des Pressvorgangs erzeugten Druck in der Presskammer 3 oder aber darin begründet liegen, dass die Auswurfklappe 5 vor Durchführung des Pressvorgangs beispielsweise aus Wartungsgründen geöffnet wurde, aber nicht ordnungsgemäß geschlossen wurde. Um in Abhängigkeit des nach Abschluss des Pressvorgangs vorliegenden Positions- bzw. Stellungszustands der Auswurfklappe 5 einen für den jeweiligen Fall angepassten Öffnungsvorgang einzuleiten, wird die nach Abschluss des Pressvorgangs, erfindungsgemäß unmittelbar nach Abschluss des Pressvorgangs, bestimmte Position P der Auswurfklappe 5 mittels der Steuerungseinrichtung mit einem ersten vorabfestlegbaren bzw. vorabfestgelegten Positionswert P₁ (einem ersten vorabfestlegbaren bzw. vorabfestgelegten Stellwinkel P₁) verglichen. Dieser erste Positionswert P₁ entspricht einem Positionswert, der nahe an dem Positionswert der Schließstellung P_{S} der Auswurfklappe 5 liegt. Vorzugsweise liegt dieser erste Positionswert P₁ bis zu 10 % oberhalb des Positionswerts der Schließstellung P_{S} und zwar in Richtung der Öffnungsstellung P_{Ö} der Auswurfklappe 5.

Je nach Ergebnis des Vergleichs wird die Auswurfklappe 5 entweder geschwindigkeitsvariabel oder aber mit einer konstanten Geschwindigkeit bewegt bzw. verschwenkt, indem die Steuerungseinrichtung das Proportionalventil 9 entsprechend ansteuert und der Volumenstrom des dem mindestens einen Druckmittelzylinder 8 zugeführten Druckmittels reguliert bzw. gesteuert wird.

Sofern die nach Abschluss des Pressvorgangs bestimmte Position P kleiner als der erste Positionswert P₁ ist, wird die Auswurfklappe 5 mit einer ersten vorabfestlegbaren bzw. vorabfestgelegten Geschwindigkeit bzw. mit einem ersten Geschwindigkeitsbetrag G₁ in Richtung ihrer Öffnungsstellung P_{Ö} bewegt bzw. verschwenkt. Dieser erste Geschwindigkeitsbetrag G₁ entspricht vorzugsweise einer systembedingten Maximalgeschwindigkeit mit der die Auswurfklappe 5 bewegt bzw. verschwenkt werden kann. In Reaktion auf den Vergleich erzeugt die Steuerungseinrichtung ein entsprechendes Ansteuerungssignal für das Proportionalventil 9, so dass dieses den Volumenstrom des Druckmittels, das dem mindestens einen Druckmittelzylinder 8 zugeführt wird, entsprechend reguliert bzw. steuert und die Auswurfklappe mit der ersten Geschwindigkeit G₁ bewegt bzw. verschwenkt wird.

Die Auswurfklappe 5 wird mit dieser ersten Geschwindigkeit G₁ für ein bestimmtes, insbesondere vorabfestlegbares bzw. vorabfestgelegtes, erstes Zeitintervall t₁ bewegt bzw. verschwenkt. Alternativ hierzu wird die Auswurfklappe 5 mit dieser ersten Geschwindigkeit G₁ solange bewegt bzw. verschwenkt bis die Auswurfklappe 5 einen definierten Positionswert P_{def} eingenommen hat. Dieser definierte Positionswert P_{def} ist ebenfalls vorabfestlegbar bzw. vorabfestgelegt. Nach Ablauf dieses ersten Zeitintervalls t₁ oder sobald die Auswurfklappe 5 den definierten Positionswert P_{def} einnimmt, wird erneut die aktuelle bzw. gegenwärtige Position P (der aktuelle bzw. gegenwärtige Stellwinkel P) der Auswurfklappe 5 mittels des Positionssensors bestimmt. Zeitgleich wird die Geschwindigkeit G der Auswurfklappe 5 bestimmt. Die nach Ablauf des ersten Zeitintervalls t₁ oder bei Erreichen des definierten Positionswerts P_{def} bestimmte Position P der Auswurfklappe 5 wird mittels der Steuerungseinrichtung mit einem zweiten vorabfestlegbaren bzw. vorabfestgelegten Positionswert P₂ (einem zweiten vorabfestlegbaren bzw. vorabfestgelegten Stellwinkel P₂) verglichen. Dieser zweite Positionswert P₂ entspricht einem Positionswert, der nahe an dem Positionswert der Öffnungsstellung P_{Ö} der Auswurfklappe 5 liegt. Vorzugsweise liegt dieser zweite Positionswert P₂ bis zu 10 % unterhalb des Positionswerts der Öffnungsstellung P_{Ö}. Die zum selben Zeitpunkt bestimmte Geschwindigkeit G der Auswurfklappe 5 wird mittels der Steuerungseinrichtung mit einer zweiten vorabfestlegbaren bzw. vorabfestgelegten Geschwindigkeit bzw. Geschwindigkeitsbetrag G₂ verglichen. Dieser zweite Geschwindigkeitsbetrag G₂ ist geringer, vorzugsweise deutlich geringer, als der erste Geschwindigkeitsbetrag G₁. Der zweite Geschwindigkeitsbetrag G₂ ist insbesondere ein Geschwindigkeitsbetrag, der so gering ist, dass eine Überlastung und/oder Beschädigung der Mechanik der Ballenpresse 1 und/oder Lagerung der Auswurfklappe 5 an dem feststehenden Gehäuseteil 4 bei Erreichen der Öffnungsstellung P_{Ö} ausgeschlossen ist.

Je nach Ergebnis des Vergleichs wird die Geschwindigkeit G der Auswurfklappe 5 entweder schrittweise reduziert bzw. gesenkt oder aber mit der zweiten Geschwindigkeit G₂ bis in ihre Öffnungsstellung P_{Ö} bewegt bzw. verschwenkt, indem die Steuerungseinrichtung das Proportionalventil 9 entsprechend ansteuert und der Volumenstrom des Druckmittels reguliert bzw. gesteuert wird.

Sofern die nach Ablauf des ersten Zeitintervalls t₁ oder bei Erreichen des definierten Positionswerts P_{def} bestimmte Position P kleiner als der zweite Positionswert P₂ und die bestimmte Geschwindigkeit G größer als die zweite Geschwindigkeit bzw. der zweite Geschwindigkeitsbetrag G₂ ist, wird die Geschwindigkeit G der Auswurfklappe 5 um einen vorabfestlegbaren bzw. vorabfestgelegten Geschwindigkeitsbetrag oder Prozentsatz reduziert bzw. gesenkt. Vorzugsweise wird die Geschwindigkeit G der Auswurfklappe 5 um 10 % gesenkt. Dieser Vorgang wiederholt sich iterativ bis eine sogenannte Abbruchbeding erfüllt ist, wobei nach jeder Iterationsschleife die aktuelle bzw. gegenwärtige Position P (der aktuelle bzw. gegenwärtige Stellwinkel P) und die Geschwindigkeit G der Auswurfklappe 5 bestimmt und mit dem zweiten Positionswert P₂ bzw. der zweiten Geschwindigkeit bzw. dem zweiten Geschwindigkeitsbetrag G₂ verglichen werden. Sobald die nach einer Iterationsschleife bestimmte Position P der Auswurfklappe 5 den zweiten Positionswert P₂ einnimmt oder übersteigt und/oder die bestimmte Geschwindigkeit G der Auswurfklappe 5 die zweite Geschwindigkeit G₂ einnimmt oder unterschreitet, wird das Proportionalventil 9 über die Steuerungseinrichtung derart angesteuert, dass der Volumenstrom des Druckmittels so reguliert bzw. gesteuert wird, dass die Auswurfklappe mit der zweiten Geschwindigkeit G₂ bis in ihre Öffnungsstellung P_{Ö} bewegt bzw. verschwenkt wird. Sobald diese Position bzw. Stellung der Auswurfklappe 5 erreicht ist, endet der Öffnungsvorgang entsprechend dem Ablaufdiagramm aus FIG. 3. Eine neue Iterationsschleife wird vorzugsweise alle 5 Millisekunden durchgeführt, so dass die Reduktion bzw. Drosselung der Geschwindigkeit G der Auswurfklappe 5 stufenartig erfolgt.

Es sei angemerkt, dass der definierte Positionswert P_{def} mit dem zweiten vorabfestlegbaren bzw. vorabfestgelegten Positionswert P₂ zusammenfallen kann. Es ist jedoch genauso vorstellbar, dass der definierte Positionswert P_{def} in Richtung der Schließstellung P_{S} der Auswurfklappe 5 unterhalb des zweiten vorabfestgelegten Positionswerts P₂ liegt.

Sofern die nach Abschluss des Pressvorgangs bestimmte Position P größer oder gleich dem ersten Positionswert P₁ ist, wird die Auswurfklappe 5 mit der zweiten vorabfestlegbaren bzw. vorabfestgelegten Geschwindigkeit bzw. dem zweiten Geschwindigkeitsbetrag G₂ in Richtung ihrer Öffnungsstellung P_{Ö} bewegt bzw. verschwenkt. Die Steuerungseinrichtung erzeugt ein entsprechendes Ansteuerungssignal für das Proportionalventil 9, so dass dieses den Volumenstrom des Druckmittels, das dem mindestens einen Druckmittelzylinder 8 zugeführt wird, entsprechend reguliert bzw. steuert und die Auswurfklappe 5 mit der zweiten Geschwindigkeit G₂ bewegt bzw. verschwenkt wird.

Wenn die Auswurfklappe 5, beispielsweise während des Pressvorgangs des Rundballens, ungeöffnet, also in ihrer Schließstellung P_{S}, verbleiben soll, wird ein Signal erzeugt, dass angibt, dass der Öffnungsvorgang der Auswurfklappe 5 gesperrt ist. Die Geschwindigkeit G der Auswurfklappe 5 beträgt dann bzw. demnach null. Sobald die Steuerungseinrichtung ein Öffnungssignal erhält, wird der Öffnungsvorgang der Auswurfklappe 5 initiiert. Alternativ hierzu kann ein Zeitintervalls t₃ definiert werden, wobei mittels der Steuerungseinrichtung nach Ablauf des Zeitintervalls t₃ überprüft wird, ob ein Öffnungssignal erzeugt bzw. empfangen wurde, so dass der Öffnungsvorgang der Auswurfklappe 5 initiiert werden muss. Das Zeitintervall t₃ wird nach Ablauf zurückgesetzt, sofern kein Öffnungssignal generiert bzw. empfangen wurde.

Mittels des vorstehend unter Bezugnahme auf FIG. 3 erläuterten Verfahrens zum Öffnen der Auswurfklappe 5 der Rundballenpresse 1 kann besonders unkompliziert über eine Ansteuerung des Proportionalventils 9 mittels der Steuerungseinrichtung und eine hierdurch erzielte Steuerung bzw. Regulierung des Volumenstroms des an den mindestens einen Druckmittelzylinder 8 geförderten Druckmittels die Auswurfklappe 5 zum Auswerfen der Rundballen stets so geöffnet werden, dass eine am unteren Rand der Auswurfklappe 5 angeordnete Presswalze 7 zu keinem Zeitpunkt während des Öffnungsvorgangs der Auswurfklappe 5 in Kontakt mit einer Hülle des ummantelten Rundballens tritt. Hierdurch kann der Rundballen unbeschädigt aus der Presskammer 3 der Rundballenpresse 1 ausgeworfen werden. Auch kann eine sogenannte "Fehlstellung" der Auswurfklappe 5 ermittelt und ein für diesen Zustand durchzuführender Öffnungsvorgang der Auswurfklappe 5 eingeleitet werden.

Das zuvor beschriebene Verfahren kann mittels eines Computerprogramms, insbesondere eines Computerprogrammprodukts, ausgeführt werden, welches Befehle umfasst, die die Steuerungseinrichtung dazu veranlassen, die einzelnen Verfahrensschritte, Vergleiche und sonstigen Bestandteile des Verfahrens durchzuführen und das Proportionalventil 9 entsprechend zur Regulierung bzw. Steuerung des Volumenstroms des Druckmittels anzusteuern.

Auch wenn dies vorstehend nicht beschrieben wurde, ist es ebenfalls im Rahmen dieser Erfindung vorstellbar, dass ein Bewegen bzw. Verschwenken der Auswurfklappe 5 aus der Öffnungsstellung P_{Ö} in die Schließstellung P_{S} entsprechend dem Verfahren aus FIG. 3 erfolgen kann, wobei die Auswurfklappe 5 entsprechend zunächst schnell und dann verlangsamt bewegt bzw. verschwenkt wird. Genauso ist es vorstellbar, dass die Auswurfklappe 5 von ihrer Öffnungsstellung P_{Ö} in ihre Schließstellung P_{S} mit einer konstanten Geschwindigkeit bewegt bzw. verschwenkt wird.

### Bezugszeichenliste

1 Rundballenpresse
2 Pressengehäuse
3 Presskammer
4 Feststehendes Gehäuseteil
5 Auswurfklappe
6 Mittel zum Aufnehmen und Fördern von Erntegut
7 Presswalzen
8 Druckmittelzylinder
9 Proportionalventil
10 Tank
11 Druckmittelpumpe
12 Druckmittelzuführleitung
13 Druckmittelzuführleitung
14 Entsperrbares Rückschlagventil
15 Entsperrbares Rückschlagventil
16 Druckbegrenzungsventil

## Patentansprüche

1. Rundballenpresse (1) mit einem eine Presskammer (3) aufweisenden Pressengehäuse (2), das zumindest ein feststehendes Gehäuseteil (4) und ein an dem feststehenden Gehäuseteil (4) zwischen einer Schließstellung P_{S} und einer Öffnungsstellung P_{Ö} schwenkbar gelagerte Auswurfklappe (5) aufweist, mit Mitteln (6) zum Aufnehmen und Fördern von Erntegut in die Presskammer (3), mit mittels eines Antriebs angetriebenen Presswalzen (7), die auf dem feststehenden Gehäuseteil (4) und der Auswurfklappe (5) verteilt und die Presskammer (3) umfangsseitig begrenzend angeordnet sind, und mit einer Einrichtung zum Ummanteln von in der Presskammer (3) aus dem zugeführten Erntegut gepressten Rundballen mit einer Hülle,
**gekennzeichnet, durch**
mindestens einen doppeltwirkenden Druckmittelzylinder (8), insbesondere einen Hydraulikzylinder, der mit der Auswurfklappe (5) verbunden und dazu eingerichtet ist, die Auswurfklappe (5) reversibel zwischen der Schließstellung P_{S} und der Öffnungsstellung P_{Ö} zu verschwenken, und ein Proportionalventil (9), vorzugsweise ein 4/3-Wegeproportionalventil, das mit dem mindestens einen Druckmittelzylinder (8) zum Zuführen, Abführen und oder Regulieren eines Druckmittels, insbesondere einer Hydraulikflüssigkeit, und einer Steuerungseinrichtung verbunden ist, wobei die Steuerungseinrichtung dazu eingerichtet ist, das Proportionalventil (9) derart anzusteuern, dass ein Öffnungsvorgang der Auswurfklappe (5) in Abhängigkeit einer unmittelbar nach Abschluss eines Pressvorgangs bestimmten Position P der Auswurfklappe (5) entweder mit einer konstanten Geschwindigkeit oder geschwindigkeitsvariabel erfolgt.

2. Rundballenpresse (1) nach Anspruch 1, **dadurch gekennzeichnet, dass** bei dem geschwindigkeitsvariablen Öffnungsvorgang die Geschwindigkeit G der Auswurfklappe (5) zwischen einem ersten vorabfestgelegten Geschwindigkeitsbetrag G₁ und einem zweiten vorabfestgelegten Geschwindigkeitsbetrag G₂, der verschieden von dem ersten vorabfestgelegten Geschwindigkeitswert G₁ ist, variiert und bei dem Öffnungsvorgang mit konstanter Geschwindigkeit die Geschwindigkeit der Auswurfklappe (5) den zweiten vorabfestgelegten Geschwindigkeitsbetrag G₂ annimmt.

3. Rundballenpresse (1) nach Anspruch 2, **dadurch gekennzeichnet, dass** der erste vorabfestgelegte Geschwindigkeitsbetrag G₁ größer als der zweite vorabfestgelegte Geschwindigkeitsbetrag G₂ ist, wobei, vorzugsweise, der erste vorabfestgelegte Geschwindigkeitsbetrag G₁ einer systembedingten Maximalgeschwindigkeit entspricht.

4. Rundballenpresse (1) nach Anspruch 2 oder 3, **dadurch gekennzeichnet, dass** der erste vorabfestgelegte Geschwindigkeitsbetrag G₁ und/oder der zweite vorabfestgelegte Geschwindigkeitsbetrag G₂ in Abhängigkeit von Betriebsparametern der Rundballenpresse (1) und/oder von Parametern des Rundballens vorabfestgelegt ist, vorzugsweise in Abhängigkeit einer Auswurfgeschwindigkeit eines gepressten Rundballens.

5. Rundballenpresse (1) nach einem der Ansprüche 1 bis 4, **dadurch gekennzeichnet, dass** die Steuerungseinrichtung dazu eingerichtet ist, die unmittelbar nach Abschluss des Pressvorgangs bestimmte Position P der Auswurfklappe (5) mit einem ersten vorabfestgelegten Positionswert P₁ zu vergleichen und basierend auf dem Vergleich das Proportionalventil (9) derart anzusteuern, entweder den Öffnungsvorgang mit konstanter Geschwindigkeit oder den geschwindigkeitsvariablen Öffnungsvorgang einzuleiten.

6. Rundballenpresse (1) nach Anspruch 5, **dadurch gekennzeichnet, dass,** falls die unmittelbar nach Abschluss des Pressvorgangs bestimmte Position P der Auswurfklappe (5) den ersten vorabfestgelegten Positionswert P₁ unterschreitet, die Steuerungseinrichtung dazu eingerichtet ist, das Proportionalventil (9) derart anzusteuern, dass die Geschwindigkeit G der Auswurfklappe (5) den ersten vorabfestgelegten Geschwindigkeitsbetrag G₁ annimmt und zwar für die Dauer eines ersten vorabfestgelegten Zeitintervalls t₁ oder bis die Auswurfklappe (5) einen definierten Positionswert P_{def} einnimmt.

7. Rundballenpresse (1) nach Anspruch 6, **dadurch gekennzeichnet, dass** die Steuerungseinrichtung dazu eingerichtet ist, eine nach Ablauf, vorzugsweise unmittelbar nach Ablauf, des ersten vorabfestgelegten Zeitintervalls t₁ oder bei Erreichen des definierten Positionswerts P_{def} bestimmte Position P der Auswurfklappe (5) mit einem zweiten vorabfestgelegten Positionswert P₂ iterativ zu vergleichen und basierend auf dem Vergleich das Proportionalventil (9) anzusteuern, wobei, vorzugsweise, die Steuerungseinrichtung dazu eingerichtet ist, eine neue Iterationsschleife jeweils nach Ablauf eines zweiten vorabfestgelegten Zeitintervalls t₂ auszulösen.

8. Rundballenpresse (1) nach Anspruch 7, **dadurch gekennzeichnet, dass,** falls die nach Ablauf des ersten vorabfestgelegten Zeitintervalls t₁ oder bei Erreichen des definierten Positionswerts P_{def} in einer Iterationsschleife bestimmte Position P der Auswurfklappe (5) den zweiten vorabfestgelegten Positionswert P₂ unterschreitet und die Geschwindigkeit G der Auswurfklappe (5) zu diesem Zeitpunkt den zweiten Geschwindigkeitsbetrag G₂ übersteigt, die Steuerungseinrichtung dazu eingerichtet ist, das Proportionalventil (9) derart anzusteuern, dass sich die Geschwindigkeit G der Auswurfklappe (5) je Iterationsschleife um einen vorabfestgelegten Geschwindigkeitsbetrag oder einen Prozentsatz, vorzugsweise um 10 %, reduziert und zwar bis die nach einer Iterationsschleife bestimmte Position P der Auswurfklappe (5) den zweiten vorabfestgelegten Positionswert P₂ einnimmt oder überschreitet und/oder die Geschwindigkeit G der Auswurfklappe (5) den zweiten vorabfestgelegten Geschwindigkeitsbetrag G₂ annimmt oder unterschreitet.

9. Rundballenpresse (1) nach Anspruch 8, **dadurch gekennzeichnet, dass,** falls die nach Ablauf des ersten vorabfestgelegten Zeitintervalls t₁ oder bei Erreichen des definierten Positionswerts P_{def} bestimmte Position P der Auswurfklappe (5) den zweiten vorabfestgelegten Positionswert P₂ einnimmt oder überschreitet und/oder die Geschwindigkeit G der Auswurfklappe (5) den zweiten vorabfestgelegten Geschwindigkeitsbetrag G₂ annimmt oder unterschreitet, die Steuerungseinrichtung dazu eingerichtet ist, das Proportionalventil (9) derart anzusteuern, dass die Geschwindigkeit G der Auswurfklappe (5) den zweiten vorabfestgelegten Geschwindigkeitsbetrag G₂ annimmt und zwar bis die Auswurfklappe (5) die Öffnungsstellung P_{Ö} eingenommen hat.

10. Rundballenpresse (1) nach Anspruch 5, **dadurch gekennzeichnet, dass,** falls die unmittelbar nach Abschluss des Pressvorgangs bestimmte Position P der Auswurfklappe (5) dem ersten vorabfestgelegten Positionswert P₁ entspricht oder diesen überschreitet, die Steuerungseinrichtung dazu eingerichtet ist, das Proportionalventil (9) derart anzusteuern, dass die Geschwindigkeit G der Auswurfklappe (5) den zweiten vorabfestgelegten Geschwindigkeitsbetrag G₂ annimmt und zwar bis die Auswurfklappe die Öffnungsstellung P_{Ö} eingenommen hat.

11. Rundballenpresse (1) nach einem der Ansprüche 7 bis 10, **dadurch gekennzeichnet, dass** der erste vorabfestgelegte Positionswert P₁ betragsmäßig kleiner als der zweite vorabfestgelegte Positionswert P₂ ist, wobei der erste vorabfestgelegte Positionswert P₁ nahe an dem Positionswert der Schließstellung P_{S} der Auswurfklappe (5), vorzugsweise bis zu 10 % von dem Positionswert der Schließstellung P_{S} in Richtung der Öffnungsstellung P_{Ö} abweicht, und der zweite vorabfestgelegte Positionswert P₂ nahe an dem Positionswert der Öffnungsstellung P_{Ö} der Auswurfklappe (5), besonders bevorzugt mindestens 10 % unterhalb des Positionswert der Öffnungsstellung P_{Ö}, liegt.

12. Rundballenpresse (1) nach einem der Ansprüche 6 bis 11, **dadurch gekennzeichnet, dass** das erste vorabfestgelegte Zeitintervall t₁ mindestens eine Sekunde, vorzugsweise 1,5 Sekunden, das zweite vorabfestgelegte Zeitintervall t₂ 5 Millisekunden beträgt und/oder der definierte Positionswert P_{def} kleiner als der zweite vorabfestgelegte Positionswert P₂ ist oder diesem entspricht.

13. Rundballenpresse (1) nach einem der Ansprüche 1 bis 12, **gekennzeichnet durch** einen Positionssensor, insbesondere einen Drehwinkelsensor, der mit der Steuerungseinrichtung verbunden und der dazu eingerichtet ist, vorzugsweise kontinuierlich, die Position P, insbesondere einen Stellwinkel, der Auswurfklappe (5) mittelbar oder unmittelbar zu bestimmen.

14. Landwirtschaftliche Arbeitsmaschine, **dadurch gekennzeichnet, dass** eine Rundballenpresse (1) nach einem der Ansprüche 1 bis 13 an die landwirtschaftliche Arbeitsmaschine angehängt ist.

15. Verfahren zum Öffnen einer Auswurfklappe (5) einer Rundballenpresse (1) nach einem der Ansprüche 1 bis 13, **dadurch gekennzeichnet, dass** das Verfahren die folgenden Verfahrensschritte umfasst:
a) Erhalten eines Signals zum Öffnen der Auswurfklappe (5) nach Abschluss eines Pressvorgangs.
b) Bestimmen, unmittelbar nach Abschluss eines Pressvorgangs, einer Position P, vorzugsweise eines Stellwinkels P, der Auswurfklappe (5) nach Erhalt des Signals zum Öffnen der Auswurfklappe (5) und Vergleichen der bestimmten Position P mit einem ersten vorabfestgelegten Positionswert P₁, vorzugsweise einem ersten vorabfestgelegten Stellwinkel P₁.
c) Sofern die im Verfahrensschritt b) bestimmte Position P den ersten vorabfestgelegte Positionswert P₁ unterschreitet, Verschwenken der Auswurfklappe (5) mit einer ersten vorabfestgelegten Geschwindigkeit G₁ und zwar für ein erstes vorabfestgelegtes Zeitintervall t₁ oder bis die Auswurfklappe (5) einen definierten Positionswert P_{def} erreicht.
d) Nach Ablauf des ersten vorabfestgelegten Zeitintervalls t₁ oder Erreichen des definierten Positionswerts P_{def} im Verfahrensschritt c), Bestimmen der Position P und der Geschwindigkeit G der Auswurfklappe (5), Vergleichen der bestimmten Position P mit einem zweiten vorabfestgelegten Positionswert P₂, vorzugsweise einem zweiten vorabfestgelegten Stellwinkel P₂, und Vergleichen der Geschwindigkeit G mit einer zweiten vorabfestgelegten Geschwindigkeit G₂.
e) Sofern die im Verfahrensschritt d) bestimmte Position P der Auswurfklappe (5) kleiner ist als der zweite vorabfestgelegte Positionswert P₂ und die Geschwindigkeit G größer ist als die zweite vorabfestgelegte Geschwindigkeit G₂, Reduzieren der Geschwindigkeit G der Auswurfklappe (5) um einen vorabfestgelegten Geschwindigkeitsbetrag oder einen Prozentsatz, vorzugsweise um 10 %, und Wiederholen des Verfahrensschrittes d), vorzugsweise nach Ablauf eines zweiten vorabfestgelegten Zeitintervalls t₂.
f) Sofern die im Verfahrensschritt d) bestimmte Position P der Auswurfklappe (5) dem zweiten vorabfestgelegten Positionswert P₂ einnimmt oder diesen überschreitet und/oder die Geschwindigkeit G die zweite vorabfestgelegte Geschwindigkeit G₂ annimmt oder unterschreitet, Verschwenken der Auswurfklappe (5) mit der zweiten vorabfestgelegten Geschwindigkeit G₂ und zwar bis zum Erreichen einer Öffnungsstellung P_{Ö} der Auswurfklappe (5).
g) Sofern die im Verfahrensschrittes b) bestimmte Position P den ersten vorabfestgelegten Positionswert P₁ einnimmt oder diesen überschreitet, Verschwenken der Auswurfklappe (5) mit der zweiten vorabfestgelegten Geschwindigkeit G₂ und zwar bis zum Erreichen der Öffnungsstellung P_{Ö} der Auswurfklappe (5).

16. Computerprogramm, insbesondere Computerprogrammprodukt, **dadurch gekennzeichnet, dass** das Computerprogramm Befehle umfasst, die bei der Ausführung des Programms durch eine Steuerungseinrichtung der Rundballenpresse nach einem der Ansprüche 1 bis 13 diese veranlassen, das Verfahren nach Anspruch 15 auszuführen.

## Claims

1. A round baler (1) with a baler housing (2) having a baling chamber (3), the baler housing having at least one fixed housing portion (4) and an ejection gate (5) mounted on the fixed housing portion (4) pivotable between a closed position P_{S} and an open position P_{O}, with means (6) for picking up and conveying harvested material into the baling chamber (3), with baler rollers (7), driven by means of a drive, which are distributed on the fixed housing portion (4) and the ejection gate (5) and are disposed bordering the circumference of the baling chamber (3), and with a device for covering round bales compacted from the supplied harvested material in the baling chamber (3) with a cover,
**characterized by**
at least one double-acting pressurizing medium cylinder (8), in particular a hydraulic cylinder, which is connected to the ejection gate (5) and is configured to reversibly pivot the ejection gate (5) between the closed position P_{S} and the open position P_{O}, and a proportional valve (9), preferably a 4/3-way proportional valve, which is connected to the at least one pressurizing medium cylinder (8) in order to supply, remove and/or regulate a pressurizing medium, in particular a hydraulic fluid, and to a control device, wherein the control device is configured to actuate the proportional valve (9) in a manner such that an opening procedure of the ejection gate (5) is implemented either at a constant speed or at a variable speed as a function of a position P of the ejection gate (5) determined immediately after completion of a baling procedure.

2. The round baler (1) according to claim 1, **characterized in that** in the case of the variable-speed opening procedure, the speed G of the ejection gate (5) varies between a first predetermined speed value G₁ and a second predetermined speed value G₂, which is different from the first predetermined speed value G₁, and in the case of the opening procedure at constant speed, the speed of the ejection gate (5) adopts the second predetermined speed value G₂.

3. The round baler (1) according to claim 2, **characterized in that** the first predetermined speed value G₁ is larger than the second predetermined speed value G₂, wherein preferably, the first predetermined speed value G₁ corresponds to a system-related maximum speed.

4. The round baler (1) according to claim 2 or claim 3, **characterized in that** the first predetermined speed value G₁ and/or the second predetermined speed value G₂ is predetermined as a function of operating parameters of the round baler (1) and/or of parameters of the round bale, preferably as a function of an ejection speed of a compacted round bale.

5. The round baler (1) according to one of claims 1 to 4, **characterized in that** the control device is configured to compare the position P of the ejection gate (5) determined immediately after completion of the baling procedure with a first predetermined position value P₁ and, based on the comparison, to actuate the proportional valve (9) in a manner such that either the constant-speed opening procedure or the variable-speed opening procedure is initiated.

6. The round baler (1) according to claim 5, **characterized in that** if the position P of the ejection gate (5) determined immediately after completion of the baling procedure is below the first predetermined position value P₁, the control device is configured to actuate the proportional valve (9) in a manner such that the speed G of the ejection gate (5) adopts the first predetermined speed value G₁ and in fact for the duration of a first predetermined time interval t₁ or until the ejection gate (5) takes up a defined position value P_{def}.

7. The round baler (1) according to claim 6, **characterized in that** the control device is configured to iteratively compare a position P of the ejection gate (5) determined after the expiration, preferably immediately after the expiration, of the first predetermined time interval t₁ or upon reaching the defined position value P_{def}, with a second predetermined position value P₂ and to actuate the proportional valve (9) on the basis of the comparison, wherein preferably, the control device is configured to initiate a new iteration loop after each expiration of a second predetermined time interval t₂.

8. The round baler (1) according to claim 7, **characterized in that** if the position P of the ejection gate (5) determined in an iteration loop after the expiration of the first predetermined time interval t₁ or upon reaching the defined position value P_{def} is below the second predetermined position value P₂ and the speed G of the ejection gate (5) exceeds the second speed value G₂ at this point in time, the control device is configured to actuate the proportional valve (9) in a manner such that the speed G of the ejection gate (5) per iteration loop is reduced by a predetermined speed value or by a percentage, preferably by 10%, and in fact until the position P of the ejection gate (5) after an iteration loop takes up or exceeds the second predetermined position value P₂ and/or the speed G of the ejection gate (5) adopts or is below the second predetermined speed G₂.

9. The round baler (1) according to claim 8, **characterized in that** if the position P of the ejection gate (5) determined after the expiration of the first predetermined time interval t₁ or upon reaching the defined position value P_{def} takes up or exceeds the second predetermined position value P₂ and/or the speed G of the ejection gate (5) adopts or is below the second predetermined speed value G₂, the control device is configured to actuate the proportional valve (9) in a manner such that the speed G of the ejection gate (5) adopts the second predetermined speed value G₂ and in fact until the ejection gate (5) has taken up the open position P_{O}.

10. The round baler (1) according to claim 5, **characterized in that** if the position P of the ejection gate (5) determined immediately after completion of the baling procedure corresponds to the first predetermined position value P₁ or exceeds it, the control device is configured to actuate the proportional valve (9) in a manner such that the speed G of the ejection gate (5) adopts the second predetermined speed value G₂ and in fact until the ejection gate has taken up the open position P_{O}.

11. The round baler (1) according to one of claims 7 to 10, **characterized in that** the value for the first predetermined position value P₁ is smaller than the second predetermined position value P₂, wherein the first predetermined position value P₁ is close to the position value of the closed position P_{S} of the ejection gate (5), preferably differs from the position value of the closed position P_{S} in the direction of the open position P_{O} by up to 10%, and the second predetermined position value P₂ is close to the position value of the open position P_{O} of the ejection gate (5), particularly preferably at least 10% below the position value of the open position P_{O}.

12. The round baler (1) according to one of claims 6 to 11, **characterized in that** the first predetermined time interval t₁ is at least one second, preferably 1.5 seconds, the second predetermined time interval t₂ is 5 milliseconds and/or the defined position value P_{def} is smaller than the second predetermined position value P₂ or corresponds thereto.

13. The round baler (1) according to one of claims 1 to 12, **characterized by** a position sensor, in particular a rotary angle sensor, which is connected to the control device and is configured to directly or indirectly determine, preferably continuously, the position P, in particular a turning angle, of the ejection gate (5).

14. An agricultural working machine, **characterized in that** a round baler (1) according to one of claims 1 to 13 is attached to the agricultural working machine.

15. A method for opening an ejection gate (5) of a round baler (1) according to one of claims 1 to 13, **characterized in that** the method comprises the following method steps:
a) receiving a signal for opening the ejection gate (5) after completion of a baling procedure,
b) determining, immediately after completion of a baling procedure, a position P, preferably a turning angle P, of the ejection gate (5) after receiving the signal for opening the ejection gate (5) and comparing the determined position P with a first predetermined position value P₁, preferably a first predetermined turning angle P₁,
c) if the position P determined in method step b) is below the first predetermined position value P₁, pivoting the ejection gate (5) at a first predetermined speed G₁ and in fact for a first predetermined time interval t₁ or until the ejection gate (5) reaches a defined position value P_{def},
d) after the expiration of the first predetermined time interval t₁ or reaching the defined position value P_{def} in method step c), determining the position P and the speed G of the ejection gate (5), comparing the determined position P with a second predetermined position value P₂, preferably a second predetermined turning angle P₂, and comparing the speed G with a second predetermined speed G₂,
e) if the position P of the ejection gate (5) determined in method step d) is smaller than the second predetermined position value P₂ and the speed G is larger than the second predetermined speed G₂, reducing the speed G of the ejection gate (5) by a predetermined speed value or by a percentage, preferably by 10%, and repeating the method step d), preferably after the expiration of a second predetermined time interval t₂,
f) if the position P of the ejection gate (5) determined in method step d) takes up the second predetermined position value P₂ or exceeds it and/or the speed G adopts or is below the second predetermined speed G₂, pivoting the ejection gate (5) at the second predetermined speed G₂ and in fact until an open position P_{O} of the ejection gate (5) is reached,
g) if the position P determined in method step b) takes up the first predetermined position value P₁ or exceeds it, pivoting the ejection gate (5) at the second predetermined speed G₂ and in fact until the open position P_{O} of the ejection gate (5) is reached.

16. A computer program, in particular a computer program product, **characterized in that** the computer program comprises commands which, during the execution of the program by a control device of the round baler according to one of claims 1 to 13, cause it to implement the method according to claim 15.

## Revendications

1. Presse à balles rondes (1) comprenant un carter de presse (2) qui présente une chambre de pressage (3) et comporte au moins une partie de carter fixe (4) et une trappe d'éjection (5) montée sur la partie de carter fixe (4) avec possibilité de pivotement entre une position de fermeture P_{S} et une position d'ouverture P_{Ö}, comprenant des moyens (6) destinés à accueillir et transporter la récolte vers la chambre de pressage (3), comprenant des rouleaux de pressage (7) qui sont entraînés à l'aide d'un moyen d'entraînement et sont répartis sur la partie de carter fixe (4) et la trappe d'éjection (5) et sont disposés de manière à délimiter la chambre de pressage (3) sur son pourtour, et comprenant un dispositif pour entourer d'une enveloppe des balles rondes pressées dans la chambre de pressage (3) à partir de la récolte amenée,
**caractérisée par**
au moins un vérin à fluide sous pression (8) à double effet, notamment un vérin hydraulique, qui est relié à la trappe d'éjection (5) et est conçu pour faire pivoter la trappe d'éjection (5) de façon réversible entre la position de fermeture P_{S} et la position d'ouverture P_{Ö} , et un distributeur proportionnel (9), de préférence un distributeur proportionnel à 4/3 voies, qui est relié au vérin à fluide sous pression (8), au nombre d'au moins un, en vue de l'amenée, de l'évacuation et/ou de la régulation d'un fluide sous pression, notamment d'un fluide hydraulique, et à un dispositif de commande, le dispositif de commande étant conçu pour activer le distributeur proportionnel (9) de manière à ce qu'une opération d'ouverture de la trappe d'éjection (5) soit effectuée en fonction d'une position P de la trappe d'éjection (5) déterminée immédiatement après la fin d'une opération de pressage, soit à une vitesse constante, soit à une vitesse variable.

2. Presse à balles rondes (1) selon la revendication 1, **caractérisée en ce que** lors de l'opération d'ouverture à vitesse variable, la vitesse G de la trappe d'éjection (5) varie entre une première valeur de vitesse G₁ préétablie et une deuxième valeur de vitesse G₂ préétablie qui est différente de la première valeur de vitesse G₁ préétablie, et lors de l'opération d'ouverture à vitesse constante, la vitesse de la trappe d'éjection (5) adopte la deuxième valeur de vitesse G₂ préétablie.

3. Presse à balles rondes (1) selon la revendication 2, **caractérisée en ce que** la première valeur de vitesse G₁ préétablie est supérieure à la deuxième valeur de vitesse G₂ préétablie, la première valeur de vitesse G₁ préétablie correspondant de préférence à une vitesse maximale conditionnée par le système.

4. Presse à balles rondes (1) selon la revendication 2 ou 3, **caractérisée en ce que** la première valeur de vitesse G₁ préétablie et/ou la deuxième valeur de vitesse G₂ préétablie est préétablie en fonction de paramètres de fonctionnement de la presse à balles rondes (1) et/ou de paramètres de la balle ronde, de préférence en fonction d'une vitesse d'éjection d'une balle ronde pressée.

5. Presse à balles rondes (1) selon une des revendications 1 à 4, **caractérisée en ce que** le dispositif de commande est conçu pour comparer la position P de la trappe d'éjection (5), déterminée immédiatement après la fin de l'opération de pressage, avec une première valeur de position P₁ préétablie et pour activer, sur la base de la comparaison, le distributeur proportionnel (9) de manière à ce qu'il déclenche soit l'opération d'ouverture à vitesse constante, soit l'opération d'ouverture à vitesse variable.

6. Presse à balles rondes (1) selon la revendication 5, **caractérisée en ce que**, dans le cas où la position P de la trappe d'éjection (5) déterminée immédiatement après la fin de l'opération de pressage passe sous la première valeur de position P₁ préétablie, le dispositif de commande est conçu pour activer le distributeur proportionnel (9) de manière à ce que la vitesse G de la trappe d'éjection (5) adopte la première valeur de vitesse G₁ préétablie, et cela pour la durée d'un premier intervalle de temps t₁ préétabli ou jusqu'à ce que la trappe d'éjection (5) adopte une valeur de position définie P_{def}.

7. Presse à balles rondes (1) selon la revendication 6, **caractérisée en ce que** le dispositif de commande est conçu pour comparer de manière itérative une position P de la trappe d'éjection (5), déterminée après la fin, de préférence immédiatement après la fin du premier intervalle de temps t₁ préétabli ou lorsque la valeur de position définie P_{def} est atteinte, avec une deuxième valeur de position P₂ préétablie et pour activer le distributeur proportionnel (9) sur la base de la comparaison, le dispositif de commande étant de préférence conçu pour déclencher une nouvelle boucle d'itération, chaque fois à la fin d'un deuxième intervalle de temps t₂ préétabli.

8. Presse à balles rondes (1) selon la revendication 7, **caractérisée en ce que**, dans le cas où la position P de la trappe d'éjection (5), déterminée dans une boucle d'itération après la fin du premier intervalle de temps t₁ préétabli ou lorsque la valeur de position définie P_{def} est atteinte, est inférieure à la deuxième valeur de position P₂ préétablie et la vitesse G de la trappe d'éjection (5) à cet instant est supérieure à la deuxième valeur de vitesse G₂, le dispositif de commande est conçu pour activer le distributeur proportionnel (9) de manière à ce que la vitesse G de la trappe d'éjection (5) diminue d'une valeur de vitesse préétablie ou d'un pourcentage, de préférence de 10 %, pour chaque boucle d'itération, et cela jusqu'à ce que la position P de la trappe d'éjection (5), déterminée après une boucle d'itération, adopte ou dépasse la deuxième valeur de position P₂ préétablie et/ou la vitesse G de la trappe d'éjection (5) adopte ou passe sous la deuxième valeur de vitesse G₂ préétablie.

9. Presse à balles rondes (1) selon la revendication 8, **caractérisée en ce que**, dans le cas où la position P de la trappe d'éjection (5), déterminée après la fin du premier intervalle de temps t₁ préétabli ou lorsque la valeur de position définie P_{def} est atteinte, adopte ou dépasse la deuxième valeur de position P₂ préétablie, et/ou la vitesse G de la trappe d'éjection (5) adopte la deuxième valeur de vitesse G₂ préétablie ou devient inférieure à celle-ci, le dispositif de commande est conçu pour activer le distributeur proportionnel (9) de manière à ce que la vitesse G de la trappe d'éjection (5) adopte la deuxième valeur de vitesse G₂ préétablie, et cela jusqu'à ce que la trappe d'éjection (5) occupe la position d'ouverture P_{Ö}.

10. Presse à balles rondes (1) selon la revendication 5, **caractérisée en ce que**, dans le cas où la position P de la trappe d'éjection (5), déterminée immédiatement après la fin de l'opération de pressage, correspond ou est supérieure à la première valeur de position P₁ préétablie, le dispositif de commande est conçu pour activer le distributeur proportionnel (9) de manière à ce que la vitesse G de la trappe d'éjection (5) adopte la deuxième valeur de vitesse G₂ préétablie, et cela jusqu'à ce que la trappe d'éjection (5) occupe la position d'ouverture P_{Ö}.

11. Presse à balles rondes (1) selon une des revendications 7 à 10, **caractérisée en ce que** la première valeur de position P₁ préétablie est plus petite en valeur que la deuxième valeur de position P₂ préétablie, la première valeur de position P₁ préétablie, à proximité de la valeur de la position de fermeture P_{S} de la trappe d'éjection (5), s'écartant de préférence jusqu'à 10 % de la valeur de la position de fermeture P_{S}, en direction de la position d'ouverture P_{Ö}, et la deuxième valeur de position P₂ préétablie, à proximité de la valeur de la position d'ouverture P_{Ö} de la trappe d'éjection (5), étant de manière particulièrement avantageuse inférieure d'au moins 10 % à la valeur de la position d'ouverture P_{Ö}.

12. Presse à balles rondes (1) selon une des revendications 6 à 11, **caractérisée en ce que** le premier intervalle de temps t₁ préétabli est au moins d'une seconde, de préférence de 1,5 secondes, le deuxième intervalle de temps t₂ préétabli est de 5 millisecondes et/ou la valeur de position définie P_{def} est inférieure à la deuxième valeur de position P₂ préétablie ou correspond à celle-ci.

13. Presse à balles rondes (1) selon une des revendications 1 à 12, **caractérisée par** un capteur de position, notamment un capteur d'angle de rotation, qui est relié au dispositif de commande et qui est conçu pour déterminer, de préférence en continu, directement ou indirectement la position P, notamment un angle de réglage, de la trappe d'éjection (5).

14. Machine de travail agricole, **caractérisée en ce qu'**une presse à balles rondes (1) selon une des revendications 1 à 13 est attelée à la machine de travail agricole.

15. Procédé d'ouverture d'une trappe d'éjection (5) d'une presse à balles rondes (1) selon une des revendications 1 à 13, **caractérisé en ce que** le procédé comprend les étapes suivantes :
a) réception d'un signal en vue de l'ouverture de la trappe d'éjection (5), à la fin d'une opération de pressage ;
b) détermination, immédiatement après la fin d'une opération de pressage, d'une position P, de préférence d'un angle de réglage P, de la trappe d'éjection (5), après réception du signal pour l'ouverture de la trappe d'éjection (5) et comparaison de la position P déterminée avec une première valeur de position P₁ préétablie, de préférence un premier angle de réglage P₁ préétabli ;
c) dans la mesure où la position P, déterminée à l'étape de procédé b), passe sous la première valeur de position P₁ préétablie, pivotement de la trappe d'éjection (5) à une première vitesse G préétablie, et cela pendant un premier intervalle de temps t₁ préétabli ou jusqu'à ce que la trappe d'éjection (5) atteigne une valeur de position définie P_{def};
d) après la fin du premier intervalle de temps t₁ préétabli ou lorsque la valeur de position définie P_{def} est atteinte à l'étape de procédé c), détermination de la position P et de la vitesse G de la trappe d'éjection (5), comparaison de la position P déterminée avec une deuxième valeur de position P₂ préétablie, de préférence avec un deuxième angle de réglage P₂ préétabli, et comparaison de la vitesse G avec une deuxième vitesse G₂ préétablie ;
e) dans la mesure où la position P de la trappe d'éjection (5), déterminée à l'étape de procédé d), est inférieure à la deuxième valeur de position P₂ préétablie et la vitesse G est supérieure à la deuxième vitesse G₂ préétablie, réduction de la vitesse G de la trappe d'éjection (5) d'une valeur de vitesse préétablie ou d'un pourcentage, de préférence de 10 %, et répétition de l'étape de procédé d), de préférence après la fin d'un deuxième intervalle de temps t₂ préétabli ;
f) dans la mesure où la position P de la trappe d'éjection (5), déterminée à l'étape de procédé d), adopte ou dépasse la deuxième valeur de position P₂ préétablie et/ou la vitesse G adopte la deuxième vitesse G₂ préétablie ou devient inférieure à celle-ci, pivotement de la trappe d'éjection (5) à la deuxième vitesse G₂ préétablie, et cela jusqu'à ce qu'une position d'ouverture P_{Ö} de la trappe d'éjection (5) soit atteinte ;
g) dans la mesure où la position P déterminée à l'étape de procédé b) adopte ou dépasse la première valeur de position P₁ préétablie, pivotement de la trappe d'éjection (5) à la deuxième vitesse G₂ préétablie, et cela jusqu'à ce que la position d'ouverture P_{Ö} de la trappe d'éjection (5) soit atteinte.

16. Programme informatique, notamment produit de programme informatique, **caractérisé en ce que** le programme informatique comprend des instructions qui, lors de l'exécution du programme par un dispositif de commande de la presse à balles rondes selon une des revendications 1 à 13, font en sorte que celui-ci mette en œuvre le procédé selon la revendication 15.
